# EUROPEAN PATENT APPLICATION

(11) **EP 4 822 800 A1**
(43) Date of publication of application: **14.10.2026**
(21) Application number: 25169368.5
(22) Date of filing: 09.04.2025
(51) Int. Cl.: H01M 10/056, H01M 10/0525

(54) **COMPOSITE POLYMER ELECTROLYTE FOR A LITHIUM-ION SECONDARY BATTERY**

(71) Applicant: Daikin Chemical Europe GmbH, 40211 Düsseldorf (DE)
(72) Inventor: Friesen, Alex, 40211 Düsseldorf (DE); Brändel, Timo, 40211 Düsseldorf (DE); Nassmacher, Alexander, 40211 Düsseldorf (DE)
(74) Representative: Hoffmann Eitle

(57) **Abstract**

The present disclosure relates to an improved solid composite polymer electrolyte (CPE) for a lithium ion secondary battery comprising (A) a fluorine-containing copolymer; (B) lithium-containing solid electrolyte particles having a garnet-type structure; (C) a lithium salt; and (D) an ionic liquid, a method for its preparation, and a secondary battery comprising it.

## Description

The project leading to this application has received funding from the European Union's Horizon 2020 research and innovation programme under grant agreement No 875029.

The present invention relates to a composite polymer electrolyte (CPE), in particular a solid composite polymer electrolyte for lithium-ion secondary batteries, a composition for preparing the composite polymer electrolyte, and a method for preparing the composite polymer electrolyte. The present invention further relates to a secondary battery comprising the solid polymer electrolyte, and an electric or electronic device of an electric vehicle comprising the secondary battery.

### Background of the Invention

The present invention relates to a solid composite polymer electrolyte (CPE), in particular for lithium-ion secondary batteries, and a secondary battery comprising it.

Lithium-ion secondary batteries have been developed over the last decades and are nowadays used in a large number of devices from small electronic devices like mp3 players, bluetooth headsets, cell phones, flashlights, and power tools, to larger applications like battery-electric and hybrid cars and other vehicles, such as electrically assisted bicycles.

A lithium-ion secondary battery generally includes a cathode, an anode, a separator, and an electrolyte. The cathode includes a current collector (typically made from a conductive material, e.g. a metal such as aluminium) and a cathode active material capable of intercalating lithium ions, such as LiCoO₂, LiMnO₂, LiNᵢₓMn_{y}Co_{z}O₂, LiFePO₄ etc., and the anode generally includes an anode current collector and an anode active material, such as a carbon- or a silicon-based material, or a silicon-carbon composite material. The separator is permeable for lithium ions and serves to separate the electrodes to prevent short-circuit. The electrolyte exhibits ion conductivity and serves to provide for a medium through which the lithium ions can move from the cathode active material, wherein they are intercalated in the charged state of the secondary battery, to the anode active material during use/discharge and in the opposite direction during charging. Conventional lithium-ion batteries rely on a liquid electrolyte, such as an ethylene carbonate/propylene carbonate mixture in which a lithium salt is dissolved. However, liquid electrolytes suffer from certain drawbacks, in particular a risk of leakage. Also, liquid electrolytes can pose potential fire hazards.

Further, in order to address the problem of limited volumetric and gravimetric energy density of Li-ion batteries, alternative anode and cathode concepts have been extensively studied in the past years. The most prominent examples for alternative anodes being Silicon (Si) or Lithium Metal (LM). On the other hand, new cathode materials, focus rather on the content reduction of rare earth metals like cobalt while preserving the well understood intercalation mechanism for Li-ion storage.

However, most of the innovative anode- and cathode concepts are not feasible with the state-of-the-art liquid electrolyte systems and hence new concepts have to be developed enabling the use of these advanced technologies. It is further desired that these new concepts may contribute to higher safety of batteries and battery electric vehicles (BEV) by elimination of the highly flammable organic solvents used for the liquid electrolytes.

Accordingly, it has been attempted to provide for solid electrolytes that can replace the liquid electrolytes. Two classes of solid-state electrolytes are mainly contemplated as replacement for the established liquid electrolyte system. These are on the one hand polymeric systems, often based on Poly(ethylene oxide) (PEO), with different Li-salts as conductive components, and on the other hand purely inorganic, crystalline materials with Li -ion conductivity, typically comprising lithium ions in their respective crystal lattice.

Examples of inorganic electrolytes include ceramic materials having a garnet-type structure, such as LLZO (lithium lanthanum zirconium oxide). An example of a solid-state battery including such an inorganic crystalline material is described in WO 2022 107826 A1, and a review of garnet-type Solid-State Electrolytes is provided by C. Wang et al in Chem. Rev. 2020, 120, 10, 4257-4300.

Both classes of solid electrolytes are associated with certain advantages, but also present different challenges.

Inorganic, crystalline materials are typically particle-shaped solids and thus exhibit grain boundaries and a reduced contact area to the electrodes and the separator, thereby limiting ion conductivity and increasing internal resistance. Also, contact area to the electrodes and/or the separator can be reduced, and for porous separators and/or electrodes it is often difficult or impossible to secure good contact by penetration into the pores.

Polymer electrolytes are easier to process and can be dissolved to form solutions that upon gelling/solidification on an electrode and/or separator provide polymer electrolytes that are in close contact with both the electrodes and the separator, but often such polymer electrolytes exhibit inherently limited Li-ion conductivity. They are also prone to chemical decay and decomposition, as well as delamination during use.

The use of polymer electrolytes and inorganic crystalline electrolytes in combination leads to a so-called "composite polymer electrolyte" (CPE) that comprises both a polymeric material and an inorganic material having Li-ion conductivity. As one example, CN 114843595 describes a composite polymer electrolyte based on a tantalum based LLZTO (LLZTO) employing glycidyl ether oxypropyl cyclotetrasiloxane as polymer that is solidified with polyethylene glycol diglycidyl ether and employs a lithium salt (LiTFSI) in the pores of the LLZTO.

While such a composite material allows obtaining certain advantages, they also pose new problems, e.g. due to a reaction of the components with each other. As one example, protic or oxygen-containing solvents that are typically used for the formation of polymer electrolytes can cause the formation of a passivation layer on an inorganic electrolyte, thereby drastically impairing Li-ion conductivity. However, a solvent-based process is generally required to secure good contact with electrodes and separator, in particular for porous materials. On the other hand, polymer molecules that are soluble in non-reactive solvents (e. g. hexane) usually do not contribute to ionic conductivity and act as non-conductive binders, consequently increasing the mass of passive components within a battery cell, thereby undesirably increasing the weight of the battery and lowering energy density, and potentially impairing total ionic conductivity of a CPE.

There is thus a need for composite polymer electrolytes, in particular solid composite polymer electrolytes for lithium-ion secondary batteries, that provide for improvements over the prior art. In particular, it would be desirable to provide a composite polymer electrolyte (CPE) that satisfies one, more than one or all of the following:
- Reduced fire hazard as compared to liquid electrolytes;
- High lithium-ion conductivity throughout the CPE (total lithium ion conductivity of the CPE);
- Reduced risk of delamination of the CPE from the electrode(s) and/or the separator;
- Reduced contact resistance to electrodes as compared to particle-shaped crystalline inorganic electrolytes;
- Reduced or fully eliminated risk of forming a passivation layer on solid crystalline inorganic electrolytes such as LLZO;
- Ability to form a free-standing and flexible polymer electrolyte layer;
- Ability to be used in combination with porous electrodes/separators without significantly increasing contact resistance.

### Summary of the Invention

The present inventors have surprisingly found that a CPE that provides one, more than one or all of the above advantages over the prior art can be provided by a CPE that comprises (A) a fluorine-containing copolymer; (B) lithium-containing solid electrolyte particles having a garnet structure; (C) a lithium salt; and (D) an ionic liquid.

Without wishing to be bound by theory, it is considered that the copolymer (A) in combination with the (D) ionic liquid provides for a matrix material for the (B) lithium-containing solid electrolyte particles having a garnet structure, the matrix material in itself exhibiting lithium ion conductivity. Thus, the matrix material does not only act as a binder but contributes to the ionic conductivity of the CPE.

Further, due to the presence of recurring units derived from at least one fluorine-containing monomer, the copolymer (A) may exhibit compatibility with and solubility in a fluorine-containing solvent, for example a fluorinated ether solvent. It was found that such a solvent is capable of preventing the formation of a passivation layer on the lithium-containing solid electrolyte particles having a garnet structure, such as LLZO, so that the CPE can be formed in a solvent-based process. Thus, the copolymer (A) allows to use the (B) lithium-containing solid electrolyte particles having a garnet structure in a solvent-based process without causing the formation of a passivation layer, thereby allowing close contact with the electrodes and/or the separator, and also allows inclusion in a porous separator or electrode(s) if used, without increasing resistivity due to poor contact with the electrodes/separator as obtained in solvent-free process and/or due to the passivation layer that is formed if conventional fluorine-free ketone or alcohol solvents are used.

The present invention provides the following embodiments:
1. A solid composite polymer electrolyte (CPE) for a lithium ion secondary battery comprising
   A a fluorine-containing copolymer;
   B lithium-containing solid electrolyte particles having a garnet-type structure;
   C a lithium salt; and
   D an ionic liquid.
2. The solid composite polymer electrolyte according to embodiment 1, wherein the fluorinated copolymer is a fluorine-containing elastomer.
3. The solid composite polymer electrolyte according to any one of embodiments 1 to 2 wherein the fluorinated copolymer comprises recurring units derived from vinylidene fluoride and at least one selected from the group consisting of perfluoro (alkyl vinyl ether)s, perfluoro (alkoxy vinyl ether)s, tetrafluoroethylene, hexafluoropropylene, trifluoroethylene, chlorotrifluoroethylene, monofluoroethylene, 2,3,3,3-tetrafluoropropylene, and 1,3,3,3-tetrafluoropropylene.
4. The solid composite polymer electrolyte according to any one of embodiments 1 to 3 wherein the fluorinated copolymer comprisesg recurring units derived from at least one selected from a perfluoro (alkyl vinyl ether) or perfluoro (alkoxy vinyl ether).
5. The solid composite polymer electrolyte according to any one of embodiments 1 to 4, wherein the fluorinated copolymer and/or the CPE has a glass transition temperature of 0°C or lower, preferably -10 °C or lower, more preferable -15 °C or lower, most preferably -20°C or lower.
6. The solid composite polymer electrolyte according to any one of embodiments 1 to 5, wherein the fluorinated copolymer comprises recurring units derived from a perfluoro (alkyl vinyl ether) and/or perfluoro (alkoxy vinyl ether) in an amount of 10 to 60 mol%, relative to all recurring units of the fluorine-containing copolymer, and/or wherein preferably the copolymer comprises recurring units from a) tetrafluoroethylene and/or hexafluoropropylene and/or b) vinylidene fluoride.
7. The solid composite polymer electrolyte according to any one of embodiments 1 to 6, wherein the fluorine containing copolymer is a copolymer consisting of repeating units derived from
   a. at least one selected from a perfluoro (alkyl vinyl ether) and a perfluoro (alkoxy vinyl ether) in an amount of 10 to 60 mol%, relative to all repeating units of the copolymer;
   b. vinylidene fluoride in an amount of 40 to 90 mol%, relative to all repeating units of the copolymer; and
   c. optionally, tetrafluoroethylene and/or hexafluoropropylene, preferably tetrafluoroethylene, in an amount of 1 to 30 mol%, relative to all repeating units of the copolymer.
8. The solid composite polymer electrolyte according to any one of embodiments 1 to 7, wherein the fluorine containing copolymer has a solubility in 1,1,2,2-Tetrafluoroethyl 2,2,3,3-Tetrafluoropropylether of 1% by mass or more, preferably 5% by mass or more, at 20°C.
9. The solid composite polymer electrolyte according to any one of embodiments 1 to 9, wherein the solid electrolyte particles having a garnet-type structure are selected from Li3, Li5, Li6 and Li7 types, which is preferably selected from Li5 and Li7 types, and is more preferably Li₇La₃Zr₂O₁₂ (LLZO).
10. The solid composite polymer electrolyte according to any one of embodiments 1 to 9, wherein the components A to D are comprised in the following amounts in mass%, relative to the total mass of the solid composite polymer electrolyte:
   A fluorine-containing copolymer: 20 to 70 mass%
   B solid electrolyte particles having a garnet-type structure: 10 to 50 mass%
   C a lithium salt: 10 to 50 mass%
   D ionic liquid:10 to 50 mass%.
11. The solid composite polymer electrolyte according to any one of embodiments 1 to 11, which has a lithium ion conductivity of 10⁻⁶ S cm⁻¹ or higher at 60°C; and/or wherein the solid electrolyte particles having a garnet structure are free from a passivation layer.
12. The solid composite polymer electrolyte according to any one of embodiments 1 to 11, further comprising a fluorinated ether solvent E.
13. A method for producing a solid composite polymer electrolyte as defined in any of the preceding embodiments, the method comprising preparing a mixed solution or dispersion comprising
   A a fluorine-containing copolymer;
   B lithium-containing solid electrolyte particles having a garnet-type structure;
   C a lithium salt;
   D an ionic liquid; and
   E a fluorinated ether solvent.
      wherein preferably the fluorinated ether solvent E is selected from ether solvents represented by the following formula (I)

         Formula (I): R₁-O-R₂
      wherein R₁ and R₂ are each independently selected from fluoroalkyl groups of the general formula CₓH_{y}F_{z}, wherein x is independently 1 to 8, (y+z)=2x+1, y is independently an integer of 0 to 16, and z is independently an integer of 1 to 17.
14. The method for producing a solid composite polymer electrolyte according to embodiment 13, wherein the preparation of the mixed solution or dispersion comprises
   preparing a first solution or dispersion comprising a fluorine-containing copolymer; a lithium salt; and an ionic liquid in a fluorinated ether solvent; and
   preparing a second solution or dispersion comprising lithium-containing solid electrolyte particles in a fluorinated ether solvent, and
   combining the first and the second solution or dispersion to form the mixed solution or dispersion.
15. A lithium ion secondary battery comprising the solid composite polymer electrolyte according to any one of embodiments 1 to 12.

Further and preferred embodiments of the present invention will become apparent in light of the following detailed description.

### Brief Description of the Figures

Fig. 1 shows the results of the TGA measurement for Example 1
Fig. 2 shows the results of the determination of ion conductivities for the materials obtained in Comparative Examples 1 and 2
Fig. 3 shows the results of the determination of ion conductivities for the CPE of Example 1 containing LLZO relative to the matrix material not containing LLZO; and
Fig. 4 shows the UV-Vis spectra of CPEs prepared using a fluorinated ether solvent or acetone, respectively.

### Detailed Description of the Invention

### 1. Composite Polymer Electrolyte (CPE)

The components forming the CPE of the present invention will be described in detail below. It goes without saying that preferred embodiments of the components may be combined.

When test standards such as ASTM are referred to and different generations of the standard exist, the standard in force at 1 January 2023 applies unless a different version is indicated. Further, where a compound is referred to by both a chemical name and a chemical structure, the structure prevails in case of discrepancy.

All physical properties described in the following relate are determined at 1 atm pressure and 20°C, unless indicated otherwise. If a specified test method such as ASTM defines different conditions, the conditions of the standard prevail. The test methods employed in the examples can be used for determining the properties defined in the claims, unless indicated differently.

In the present description, the term "at least one" and "one or more" are used synonymously and encompass for example the meanings of the integers 1, 2, 3, or 4.

The term "comprising" is open-ended and does not exclude the presence of other components other than those explicitly referred to. The term however also encompasses the more restrictive meanings "consisting of" and "consisting essentially of". Here, a material or product (such as a CPE or copolymer) "consisting essentially of" may contain other components besides those that are explicitly recited, yet the amount of such other components is limited such as to not impair the intended function of the recited components for the purposes of the present invention. A material or product "consisting essentially of" the recited components may in practice contain such other materials in an amount of 10% by weight or less, such as 5% by weight or less, e.g. 2% by weight or less, 1% by weight by or less, or 0.5% by weight or less.

### A Fluorine-containing copolymer

By using a copolymer A instead of a homopolymer, the present application allows tailoring the properties of the CPE to the desired needs. Here, appropriately selecting the monomers from which the recurring units of the copolymer are derived allows adjusting the desired properties, e.g. the glass transition temperature, the stability under preparation and use conditions, solubility in e.g. solvents used during the manufacturing process, compatibility with the other components of the CPE, the ability to interact with or to be plasticized by ionic liquids, and the lithium ion conductivity of the resulting membrane, just to mention a few.

The copolymer A is part of or constitutes a matrix material for the CPE, which in combination with a lithium salt C and an ionic liquid D exhibits litihium-ion conductivity.

The type of copolymer is thus not particularly limited as long as it contains recurring units that are derived from at least one monomer that contains at least one fluorine atom (also called "fluorine-containing monomer" herein), and recurring units derived from one or more other monomer(s). Here, the other monomers are not particularly limited as long as they are copolymerizable with the at least one fluorine -containing monomer, and these other monomers may also be fluorine-containing monomers or may be monomers that do not contain fluorine. Put differently, the copolymer used in the present invention contains recurring units derived from one or more fluorine -containing monomer(s) and recurring units derived from one or more other monomer(s), the other monomer(s) containing or not containing fluorine ("fluorine-free monomer").

The copolymer A preferably has a number average molecular weight (Mn) of 20,000 or greater, preferably 30,000 or greater, and 2,000,000 or less, preferably 1,000,000 or less, as determined by gel permeation chromatography (GPC) using a polystyrene standard. A molecular weight within this range facilitates compatibility with and solubility in a fluorinated ether solvent (E) to be described later.

The copolymer and/or the CPE preferably has a glass transition temperature (Tg) of 0°C or lower, preferably -10°C or lower, more preferable -15 °C or lower, most preferably -20°C or lower, as determined by Dynamic Scanning Calorimetry (DSC). Specifically, the Tg may be determined using DSC equipment produced by METTLER-TOLEDO International Inc. by measuring, on a 10 mg of a polymer, the heat balance of a second scan at a temperature rise rate of 10° C/min in a temperature range of -50° C. to 150° C., and by a midpoint method using two points of inflection detected.

The fluorine content of the copolymer A is not limited, but is preferably from 55 to 80% by weight, preferably from 60-75% by weight, further preferably from 60 - 70% by mass. The fluorine content can be determined from the copolymer composition by ¹⁹F-NMR. A suitable fluorine content and the appropriate amount of recurring units derived from a fluorine-containing monomer may facilitate the preparation of the CPE in a solvent-based process, as thereby the compatibility with and solubility in a fluorinated ether solvent (E) to be described later can be improved.

The Mooney viscosity (ML₁₊₁₀) of the copolymer A, determined in accordance with ASTM D1646, is preferably from 40 - 150, more preferably from 55 - 85, at 100°C, and from 20 - 100, preferably from 30 - 60, at 121°C. A Mooney viscosity within this range allows facilitating the softness and flexibility of the CPE, which contributes to the avoidance of delamination from the electrode and/or the separator, in particular upon application of external stress on the battery by shock or bending, and also facilitates the ability to form a free-standing CPE layer, if desired.

The density of the copolymer A, determined in accordance with ASTM D792 at 23°C, is not particularly limited, but is preferably in the range of 1.60 to 2.00 g/cm³, more preferably from 1.70 to 1.90 g/cm³, such as from 1.75 to 1.85 g/cm³.

In order to facilitate the formation of a CPE of the invention in a solvent-based process, the copolymer A preferably exhibits compatibility with and solubility in a fluorine-containing ether solvent (E) to be described later. This property can be determined by testing the solubility in 1,1,2,2-Tetrafluoroethyl 2,2,3,3-Tetrafluoropropylether. The solubility can be tested by placing 5 g of the copolymer A, formed into particles of about 1mm diameter (longest axis for non-spherical particles), into a 250 ml beaker (wide form), adding 95 g of 1,1,2,2-Tetrafluoroethyl 2,2,3,3-Tetrafluoropropylether, adding a PTFE-coated magnetic stirring bar (Type C, 1.5 cm long and 6 mm wide), sealing the beaker with lab film (e.g. Parafilm^{™}) and stirring on a magnetic stirrer for 24 hours at 500 rpm. If a clear solution is obtained as observed by the naked eye, the copolymer has dissolved, indicating a solubility of 5% by mass or more (relative to the total weight of 1,1,2,2-Tetrafluoroethyl 2,2,3,3-Tetrafluoropropylether and copolymer A). If the solution is not clear, it is filtered, and the filter residue is dried at 50° under a vacuum of 5 mbar for 24 hours. The dried residue is then weighed to determine the amount non-dissolved copolymer A, from which the solubility can be calculated. The copolymer preferably exhibits a solubility in this test of 1% by mass or more, preferably 5% by mass or more, such as 7% or more or 8% or more, relative to the total weight of copolymer A and 1,1,2,2-Tetrafluoroethyl 2,2,3,3-Tetrafluoropropylether.

In one embodiment, the copolymer A is a fluorine-containing elastomer. An elastomer is a polymer with elastic properties, meaning that it can stretch and return to its original shape after the force causing the stretching is removed. For the purpose of the present invention, the fluorine-containing elastomer is a fluoropolymer that is amorphous or low-crystalline, and has a low glass transition temperature. Preferably, the fluorine-containing elastomer has a glass transition temperature of 25° C. or less. The fluorine-containing elastomer fluorine-containing elastomer is preferably amorphous. Amorphous means that there is no melting point peak in the DSC curve described above. the fluorine-containing elastomer is an amorphous fluorine-containing polymer. Preferably the elastomer is a material having an elongation at break (ultimate elongation) of 50% or more, determined in accordance with ASTM D412-16 using a tensile testing machine at a rate of elongation of 1000 mm/min. The relative amount of the recurring units derived from the one or more fluorine containing monomers is not particularly limited, but may e.g. be 50 mol% or higher, such as 60 mol% or higher, 70 mol% or higher, 80 mol% or higher, or 90 mol% or higher, such as 95 mol% or higher, relative to all recurring units of the copolymer A, the remainder being formed by recurring units derived from one or more fluorine-free monomers. Here, a higher relative amount of recurring units derived from the fluorine-containing one or more is preferable, and the copolymer A may consist of recurring units derived from 2 or more (e.g. 2, 3 or 4) fluorine-containing monomers. Put differently, the copolymer A may preferably be free of recurring units derived from a fluorine-free monomer.

The degree of fluorine substitution in the one or more fluorine -containing monomer(s) is not particularly limited, as long as at least one fluorine atom is present. Preferably, the fluorine -containing monomer contains 2 or more fluorine atoms, and the degree of substitution with fluorine atoms (based on the total number of C-H and C-halogen bonds in the monomer, i.e. ([amount of C-F bonds]/[total of C-halogen bonds and C-H bonds] x 100) ,may be 50% or more, such as 60% or more, 70% or more, 75% or more, 80% or more, 85% or more, 90% or more or 95% or more. The fluorine -containing monomer may however also be a perfluorinated monomer (degree of substitution the fluorine atoms = 100%), such as tetrafluoroethylene, hexafluoropropylene, or perfluoro(alkyl vinyl ether). This includes the possibility that all recurring units of the copolymer A may derive from two or more perfluorinated, preferably ethylenically unsaturated monomers. Such monomers are typically reacted by radical polymerization, in particular controlled radical polymerization (CRP), such as by iodine transfer polymerization (ITP). Utilizing such controlled radical polymerization techniques allows controlling the molecular weight and polydispersity by avoiding an uncontrolled growth of polymer chains.

The copolymer A is not particularly limited in its structure and may thus be a random copolymer or block copolymer formed by two or more blocks, e.g. as A-B-A, A-B-C, B-A-B, A-B-C-A, A-B-A-C, etc. block copolymers.

In one embodiment, the fluorinated copolymer A comprises recurring units derived from at least one selected from the group consisting of perfluoro (alkyl vinyl ether)s, perfluoro (alkoxy vinyl ether)s, tetrafluoroethylene, hexafluoropropylene, vinylidene fluoride, trifluoroethylene, chlorotrifluoroethylene, monofluoroethylene, 2,3,3,3-tetrafluoropropylene and 1,3,3,3-tetrafluoropropylene. The copolymer A may be a copolymer that comprises or consists of recurring units derived from two or more monomers selected from this group.

In light of ease of manufacturing and availability, the copolymer A is preferably a random copolymer obtained by polymerization, preferably by radical polymerization, of ethylenically unsaturated monomers, or a block copolymer composed of blocks that are each formed by polymerization of ethylenically unsaturated monomers. Examples of fluorine-containing monomers from which the recurring units of the copolymer A may be derived by radical polymerization of ethylenically unsaturated groups include without limitation vinylidene fluoride, perfluoro (alkyl vinyl ether)s, perfluoro (alkoxy vinyl ether)s, tetrafluoroethylene, hexafluoropropylene, trifluoroethylene, chlorotrifluoroethylene, monofluoroethylene, 2,3,3,3-tetrafluoropropylene and 1,3,3,3-tetrafluoropropylene.

Examples of fluorine-free monomers from which recurring units of the copolymer may be derived by radical polymerization include without limitation ethylene, propylene, isobutylene, styrene, vinyl acetate, (meth)acrylic acid, (meth)acrylates, such as linear or branched C₁₋₁₂ alkyl (preferably C₁₋₆ alkyl) (meth)acrylates such as methyl (meth)acrylate or butyl (meth)acrylate, alkyl vinyl ethers, preferably linear or branched C₁₋₁₂ alkyl (more preferably C₁₋₆ alkyl) vinyl ethers, crotonic acid, crotonic acid alkyl esters, preferably linear or branched C₁₋₁₂ alkyl (preferably C₁₋₆ alkyl) crotonic acid esters, and vinyl benzoate. Here, the linear or branched C₁₋₁₂ alkyl (preferably C₁₋₆ alkyl) groups in the alkyl (meth)acrylates, alkyl vinyl ethers and crotonic acid alkyl esters may be unsubstituted or may be substituted a substituent selected from the group consisting of hydroxyl, nitro, cyano, amino, and chloro, preferably unsubstituted or substituted with one to three selected from hydroxyl and chloro.

In one preferred embodiment, the fluorinated copolymer A comprises, consists essentially of, or consists of recurring units derived from vinylidene fluoride and at least one selected from a perfluoro (alkyl vinyl ether)s, perfluoro (alkoxy vinyl ether)s, tetrafluoroethylene, hexafluoropropylene, trifluoroethylene, chlorotrifluoroethylene, monofluoroethylene, 2,3,3,3-tetrafluoropropylene, and 1,3,3,3-tetrafluoropropylene. Here and throughout the present specification, the perfluoro (alkyl vinyl ether)s and perfluoro (alkoxy vinyl ether)s, jointly referred to as PAVE (of PAVEs), may be represented by the formulae CF₂=CF-ORf¹ and CF₂=CF-ORf², respectively, as will be explained below.

In a preferred embodiment, the fluorine-containing copolymer comprises recurring units derived from at least one perfluoro (alkyl vinyl ether) and/or at least one perfluoro (alkoxy vinyl ether) (in the following jointly referred to as PAVE). The presence of a recurring unit derived from one or more PAVE(s) may improve compatibility with and solubility in an organic solvent that can be used to produce a solid polymer electrolyte in a solvent-based process without causing the formation of a passivation layer on lithium-containing solid electrolyte particles having a garnet-type structure (in the following also referred to as "the particles B"), also in relation to copolymers A that do not contain a recurring unit derived from one or more PAVE(s).

The copolymer A can be prepared by methods known in the art, and is preferably obtained by iodine transfer polymerization. As one example, the copolymer A can be prepared as outlined in US 2012/0029152 A1 (fluoroelastomer (A)), which is hereby incorporated by reference in its entirety. Certain grades of the copolymer A are also commercially available.

As outlined above, in one preferred embodiment the copolymer A contains recurring units derived from at least one PAVE. In the present invention, the PAVE is preferably a compound of the formula CF₂=CF-ORf¹, wherein Rf¹ is a perfluoroalkyl group having 1 to 30, preferably 1 to 10 carbon atoms, more preferably 1 to 6 carbon atoms, still further preferably 1 or 2 carbon atoms, most preferably 1 carbon atom (PMVE). The PAVE also encompasses perfluoro(alkoxy vinyl ethers) of the formula CF₂=CF-ORf², wherein Rf² is a perfluoroether group containing 1 or 2 ether bonds and having 2 to 30 carbon atoms, preferably 2 to 10 carbon atoms, more preferably 2 to 6 carbon atoms. Of these, perfluoro (alkyl vinyl ethers) are preferred, and the compounds represented by for formula CF₂=CF-ORf¹ are more preferred.

Specific examples of the PAVE of formula CF₂=CF-ORf¹, wherein Rf¹ is a perfluoroalkyl group having 1 to 30, preferably 1 to 10 carbon atoms, more preferably 1 to 6 carbon atoms, still further preferably 1 or 2 carbon atoms, include perfluoro(methyl vinyl ether) (PMVE), perfluoro(ethyl vinyl ether), perfluoro(propyl vinyl ether), perfluoro(butyl vinyl ether), perfluoro(pentyl vinyl ether), and perfluoro(hexyl vinyl ether), of which PMVE is preferred.

The copolymer A is a copolymer, which in the present invention includes binary copolymers containing two different types of recurring repeating units, ternary copolymers including three types of recurring units (terpolymers), quaternary copolymers containing four types of recurring units, pentanary copolymers containing five types of recurring units, and copolymers containing more than five types (e.g. six, seven or eight) types of recurring units. In the embodiment wherein the copolymer A contains at least one recurring unit derived from at least one PAVE, the copolymer may include at least one other recurring unit that is not derived from a PAVE, i.e. that is not derived from a perfluoro (alkyl vinyl ether) or a perfluoro (alkoxy vinyl ether), which at least one other recurring unit is preferably derived from a fluorine-containing monomer. The copolymer A is preferably a binary, ternary or quaternary copolymer, more preferably a ternary copolymer (terpolymer), most preferably a terpolymer wherein two of the three recurring units are not derived from a PAVE, and which two or three recurring units that are not derived from a PAVE may all be derived from fluorine-containing monomers, including perfluorinated monomers, may all be derived from fluorine-free momomers, or may be derived from fluorine-free and fluorine-containing monomers.

The recurring units of the copolymer A derived from comonomers other than PAVE are not particularly limited, but are typically selected from the group consisting of recurring units derived from fluorinated comonomers having one or two carbon-carbon double bonds, preferably one carbon-carbon bond, preferably those containing 2 to 8, preferably 2 to 6, more preferably 2 to 4 carbon atoms. Examples of recurring units derived from fluorine-containing monomers other than PAVE include recurring units derived from vinylidene fluoride (CH₂CF₂), tetrafluoroethylene (CF₂=CF₂), hexafluoropropylene (CF₂=CF-CF₃), octafluoro-1-butene, octafluoro-2-butene and hexafluoro-1,3-butadiene. When the copolymer A is a binary or ternary copolymer containing a recurring unit derived from one PAVE, it is preferred that the recurring units derived from the one respectively two comonomers other than PAVE are selected from the group consisting of fluorinated monomers having one or two, preferably one, carbon-carbon double bond, preferably those containing 2 to 8, preferably 2 to 6, more preferably 2 to 4 carbon atoms, and are more preferably selected from the group consisting of vinylidene fluoride (VDF, CH₂CF₂), tetrafluoroethylene (TFE, CF₂=CF₂), and hexafluoropropylene (HFP, CF₂=CF-CF₃). Other examples include trifluoroethylene, chlorotrifluoroethylene, monofluoroethylene, 2,3,3,3-tetrafluoropropylene, 1,3,3,3-tetrafluoropropylene.

In a preferred embodiment, the content of repeating units derived from PAVE, preferably of the formula CF₂=CF-ORf¹, is 10 to 60 mol%, relative to all repeating units of the fluorine-containing copolymer. Generally but in particular in this embodiment, the copolymer may further comprises recurring units from a) tetrafluoroethylene and/or hexafluoropropylene and/or b) vinylidene fluoride.

Thus, in one embodiment the copolymer A is a terpolymer consisting of recurring units derived from (i) PAVE, preferably a perfluoro (alkyl vinyl ether), (ii) VDF fluoride and (iii) one of TFE and HFP, preferably TFE. Herein, the PAVE is preferably selected from those represented by the above formula CF₂=CF-ORf¹, and is further preferably PMVE. Thus, in one particularly preferred embodiment, the copolymer A is a terpolymer consisting of recurring units derived from PMVE, TFE and VdF.

In one embodiment, the copolymer A is a copolymer consisting of recurring units derived from at least one PAVE in an amount of 10 to 60 mol%, relative to all repeating units of the copolymer; VDF in an amount of 40 to 90 mol%, relative to all repeating units of the copolymer; and optionally yet preferably, tetrafluoroethylene and/or hexafluoropropylene, preferably tetrafluoroethylene, in an amount of 1 to 30 mol%, relative to all repeating units of the copolymer. Herein, the 10 to 60 mol% PAVE are formed by one or more PAVEs as defined above. The 10 to 60 mol% are preferably formed entirely by one or more perfluoro (alkyl vinyl ether)s, more preferably one or more perfluoro (alkyl vinyl ether)s represented by formula CF₂=CF-ORf¹ as defined above, including the preferred aspects thereof, and is most preferably formed by one perfluoro (alkyl vinyl ether), e.g. by perfluoromethyl vinyl ether (PMVE). The relative comonomer content in the polymer may be determined by known techniques, such as ¹⁹F-NMR.

### B Lithium-containing solid electrolyte particles having a garnet-type structure

The lithium-containing solid electrolyte particles having a garnet-type structure (in the following "the particles B") are known as solid electrolytes of inorganic, crystalline nature. A comprehensive review explaining this class of compounds and providing references to their method of preparation has been published by C. Wang et al in Chem. Rev. 2020, 120, 10, 4257-4300, which is hereby incorporated by reference in its entirety.

The particles B have a garnet-type structure and are preferably based on the elements lithium, lanthanum, zirconium, and oxygen. Here, the term "based on" means that these elements form 90 atom% or more of the atoms forming the particles B, preferably 95% or more, and includes the possibility that the particles B consist of these elements, as in the case of LLZO (Li₇La₃Zr₂O₁₂). Elements other than lithium, lanthanum, zirconium and oxygen are not particularly limited, but are typically selected from transition metals, rare earth elements and trivalent metals selected from Al, Ga, In and Tl, preferably Al or Ga. These may be present as doping elements, typically in an amount of 10 atom% or less, such as 5atom% or less, e.g. 3 atom% or less.

For pure LLZO, two structural polymorphs are described in the literature. A low-temperature tetragonal modification with a completely ordered arrangement of Li+ crystallizes in space group (SG) I41/acd (no. 142). This structure type is described as garnet-related framework with two types of dodecahedral LaOg polyhedra (8b and 16e) and ZrO₆ octahedra (16c). Li+ occupies three different sites: the tetrahedral 8a site as well as distorted octahedral 16f and 32g sites. In contrast to the tetragonal modification, the cubic high-temperature modification exhibits a disorder in the Li+ distribution. This cubic modification shows SG la-3d (no. 230) and has the garnet structure composed of a framework of 8-fold coordinated LaOg dodecahedra (24c) and 6-fold coordinated ZrO₆ octahedra (16a). Li+ is located at interstitial sites, showing tetrahedral (24d), octahedral (48g), and distorted 4-fold (96h) coordination. For use as Li-ion conductors, the cubic modification is more desirable as its Li-ion conductivity is 2 orders of magnitude higher than for the tetragonal modification. The cubic modification of pure LLZO is not stable at room temperature, but can be stabilized by the introduction of supervalent cations, which cause a reduction of the Li+ content that leads to the introduction of additional vacancies at the Li+ sites. The stabilization of the cubic modification was originally achieved by the incorporation of Al³⁺, but recent studies also include other trivalent elements such as Ga³⁺. Thus, in one embodiment the particles B may exhibit a composition represented by Li_{7-3*x*}D*ₓ*La₃Zr₂O₁₂, where D represents a doping element selected from trivalent cations, in particular Ga and Al, and x is from 0.1 to 1.

In one embodiment, the particles B are selected from Li3, Li5, Li6 and Li7 types, preferably selected from Li5 and Li7 types, and more preferably Li₇La3Zr₂O₁₂ (LLZO).

The particles B preferably exhibit a lithium ion conductivity of 10⁻⁴ S/cm or higher. The lithium ion conductivity refers to the value obtained at 20°C using the experimental protocol described in the examples.

### C Lithium Salt

The lithium salt serves to provide the CPE with lithium ions that can be utilized in the electricity-generating reaction of the battery, in particular lithium ion and lithium metal batteries.

Any lithium salt typically used in a liquid electrolyte for a lithium secondary battery may be used as the lithium salt, and, for example, the lithium salt may include Li⁺ as a cation and may include at least one selected from the group consisting of F⁻, Cl⁻, Br⁻, I⁻, NO₃⁻, N(CN)₂⁻, ClO₄⁻, BF₄⁻, B₁₀Cl₁₀⁻, PF₆⁻, CF₃SO₃⁻, CH₃CO₂⁻, CF₃CO₂⁻, AsF₆⁻, SbF₆⁻, AlCl₄⁻, AlO₄⁻, CH₃SO₃⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, SCN⁻, and (CF₃CF₂SO₂)₂N⁻ as an anion.

Specifically, the lithium salt may include at least one selected from the group consisting of LiCl, LiBr, LiI, LiClO₄, LiBF₄, LiB₁₀Cl₁₀, LiPF₆, LiCF₃SO₃, LiCH₃CO₂, LiCF₃CO₂, LiAsF₆, LiSbF₆, LiAlCl₄, LiAlO₄, LiCH₃SO₃, LiFSI (lithium bis(fluorosulfonyl) imide, LiN(SO₂F)₂), LiTFSI (lithium bis(trifluoromethanesulfonyl)imide, LiN(SO₂CF₃)₂), LiBOB (lithium bis(oxalate) borate, LiB(C₂O₄)₂), and LiBETI (lithium bisperfluoroethanesulfonimide, LiN(SO₂C₂F₅)₂). More specifically, the lithium salt may include a single material selected from the group consisting of LiPF₆, LiBF₄, LiCH₃CO₂, LiCF₃CO₂, LiCH₃SO₃, LiFSI, LiTFSI, and LiN(C₂F₅SO₂)₂, or a mixture of two or more thereof.

### D Ionic Liquid

The ionic liquid serves to facilitate the formation of an ion-conductive matrix together with the copolymer A. Without wishing to be bound by theory, it is also believed that the ionic liquid acts as a plasticizer for the copolymer A, there facilitating the formation of a flexible and/or free-standing CPE that is less prone to

An ionic liquid in the sense of the present application is a compound that is completely composed of ions and which preferably has with melting point of 100 °C or less, more preferably 50°C or less, still more preferably 20°C or less.

Such ionic liquids are typically selected from organic ammonium salts, i.e. having organic cations (not including NH₄⁺), such as quaternary alkylammonium salts having cations of the formula NR₄⁺, wherein each R is independently an organic group, preferably a group formed by carbon, hydrogen, nitrogen, sulfur, phosphor, and oxygen. Here, two R may combine to form a 5-membered or 6-membered cyclic group, such as a imidazole, piperidine or pyrrolidine group to thereby from an imidazolium, piperidinium or pyrrolidinium cation, respectively. The cations are typically bulky and asymmetrical N-substituted cations, such as N-substituted imidazolium, N-substituted pyrrolidinium, N-substituted pyridinium, or N-substituted piperidinium.

Specific examples of the cation include those derived from 1-methylimidazole, e.g. 1-C₁₋₁₂ alkyl-3-methylimidazolium, such as 1-ethyl-3-methyl- (EMIM), 1-butyl-3-methyl- (BMIM), 1-octyl-3 methyl (OMIM), 1-decyl-3-methyl-(DMIM), 1-dodecyl-3-methyl- docecylMIM), 1-butyl-2,3-dimethylimidazolium (BMMIM or DBMIM) and 1,3-di(N,N-dimethylaminoethyl)-2-methylimidazolium (DAMI); cations derived from pyridine, such as 4-methyl-N-butyl-pyridinium (MBPy) and N-octylpyridinium (C8Py), and cations derived from pyrrolidine, such as -Butyl-1-methylpyrrolidinium.

The anion is not particularly limited and can be selected from a variety of anions, and specific examples include tetrafluoroborate (BF₄⁻), hexafluorophosphate (PF₆⁻), bis-trifluoromethanesulfonimide (NTf₂⁻), trifluoromethanesulfonate (OTf⁻), bis(fluorosulfonyl)imide, and dicyanamide (N(CN)₂⁻).

Preferably, the cation is selected from di-N-substituted imidazolium, pyrrolidinium, pyridinium, or piperidinium, where the substituents at the N-position are preferably and independently a C₁₋₈ alkyl group, and the anions is selected from the anions listed above as anions of the specific examples of the lithium salt, in particular bis(fluorosulfonyl) imide, bis(trifluoromethanesulfonyl)imide, N(SO₂CF₃)₂, and bis(perfluoroethanesulfon)imide. A specific example is 1-Butyl-1-methyl-pyrrolidinium bis(fluorosulfonyl)imide.

### Composition and Properties of the CPE

The components A to D are preferably comprised in the following amounts in mass%, relative to the total mass of the solid composite polymer electrolyte:
A fluorine-containing copolymer: preferably 20 to 70 mass%, more preferably 30 to 65 mass%, still more preferably 30 to 60 mass%;
B solid electrolyte particles having a garnet-type structure: preferably 10 to 50 mass%, more preferably 10 to 40mass%, still more preferably 15 to 35 mass%, such as 20 to 30 mass%;
C lithium salt: preferably 10 to 50 mass%, more preferably 10 to 40 mass%, still more preferably 15 to 30 mass%.
D ionic liquid: preferably 10 to 50 mass%, more preferably 15 - 45 mass%, still more preferably 20 to 40 mass%.

The CPE may contain additional components in addition to the components A, B, C and D indicated above in their respective ranges, so that the total amount of the components A, B, C and D does not need to form 100% by mass of the CPE. However, the total amount of the components A, B, C and D is preferably 75% by mass or more, more preferably 80 or 85% by mass or more, such as 90% by mass or more or 95% by mass or more. The amount of the components A, B, C and D may also be 98% by mass or higher or 99% or higher, such as 100% by mass, relative to the total mass of the CPE. In the latter case, the CPE consists of the components A, B, C and D. If additional components are present, these include preferably a fluorinated ether solvent E to be described later, which may preferably be present in an amount of 0.1 % by mass or higher, such as 0.5% by mass or higher or 1% by mass or higher, and 10 % by mass or less, further preferably 5% by mass or less, such as 3% by mass or less or 2% by mass or less, relative to the total mass of the CPE. Without wishing to be bound by theory, it is considered that such amounts of a fluorinated ether solvent E may improve the lithium ionic conductivity and may improve the flexibility and other physical properties of the CPE, in particular in the form of a free-standing membrane, by acting as a plasticizer. In addition to or instead of the fluorinated ether solvent E, the optional components other than A, B, C and D may include other solvents and/or polymers. In one embodiment, the total amount of the components A, B, C and D is 75% by mass or more, and other components are present in an amount of 25% by weight or less, such as 20% by weight or less or 15% by weight or less, such as 10% by weight or less or 5% by weight or less, such as 3% by weight or less, and these other components include or consist of the fluorinated ether solvent E and optionally one or more additives. The additives may include polymers other than the copolymer A, and in this case the polymers other than the copolymer A are selected from the group consisting of fluorinated and non-fluorinated homopolymers and fluorine-free copolymers. In one embodiment, the CPE thus consists of the components A, B, C and D, the solvent E, and optionally one or more polymers other than the copolymer A as set out above. Also here, the amount of one or more polymers other than the copolymer A may be 25% by weight or less, such as 20% by weight or less or 15% by weight or less, such as 10% by weight or less or 5% by weight or less, such as 3% by weight or less, relative to the total weight of the CPE.

In the manufacturing process of the present invention described below, which may be used for forming the CPE of the invention, the use of a solvent forming a passivation layer on the solid electrolyte particles B can be avoided by relying on a specific type of solvent E. Thus, in one embodiment of the CPE, the electrolyte particles B are free from a passivation layer. Also, the CPE may be obtained from a solvent-based process, which allows better contact and reduced resistance to electrodes and separator elements.

As the matrix for the electrolyte particles B formed by the components A, C and D is already ion-conductive, the overall CPE can exhibit a high lithium ion conductivity. In consequence, the lithium ion conductivity of 10⁻⁶ S cm⁻¹ or higher at 60°C, such as 10⁻⁵ S cm⁻¹ or higher. There is no upper limit for the ionic conductivity, but in practice it may be 10⁻² S cm⁻¹ or less, such as 10⁻³ S cm⁻¹ or less or 10⁻⁴ S cm⁻¹ or less. A method for determining the ion conductivity that may be used in the present invention is indicated in the examples section.

### 2. Method for producing CPE

The present invention further pertains to a method for producing a CPE, as well as the CPE obtained from the method. This method is particularly preferably applied for forming a CPE as described above, and includes a step of preparing a mixed solution or dispersion comprising
A a fluorine-containing copolymer;
B lithium-containing solid electrolyte particles having a garnet-type structure;
C a lithium salt;
D an ionic liquid; and
E a fluorinated ether solvent.

The description and definition of the components A, B, C and D is identical to the above and is thus omitted for conciseness.

The fluorinated ether solvent is capable of dissolving or dispersing the copolymer A, and is capable of dispersing the solid electrolyte particles B without causing the formation of a passivation layer as is otherwise observed when e.g. a ketone or nitrile was used. Also, the lithium salt and the ionic liquid can be dispersed and/or dissolved in the fluorinated ether solvent E, so that all components can be suitably processed in a solvent-based process, e.g. by pouring the dispersion and or solution into a mold, followed by solvent removal and release from the mold, to obtain a free-standing CPE. However, the process can also be conducted such that the dispersion or solution is brought into contact with a separator and/an electrode such as to allow intimate contact and intrusion into any pores, if present, followed by solvent removal. In one embodiment, it is also possible to from the CPE in a battery housing that already contains the electrodes and a separator, followed by removal of the solvent, or to fill a housing with the solution or dispersion and to immerse the electrodes and the separator into the solution or dispersion, followed by solvent removal. In either of the above embodiments the separator and /or the electrode surface prior to formation of the CPE may be porous, and in the case of the electrodes the porous surface may be formed by a cathode active material or an anode active material, respectively, as is well known to a skilled person. Here, the term "porous" denotes a surface having a BET surface area (determined by nitrogen adsorption, e.g. after degassing by heating with a rate of about 5 °C /min to 180 °C, then holding the temperature 3 hours) of 1 m²/g or more, such as 5 m²/g or more, 10 m²/g or more or 20 m²/g or more, but typically 500 m²/g or less, such as 250 m²/g or less.

The mixed solution or dispersion can be prepared by combining the components A, B, C, D and E and optionally further components in a vessel and stirring the components, or employing any other means of mixing the components. The mixing can also be employed to reduce the particle size of the particles B by employing high-intensity mixing conditions.

The dispersion or solution can contain a further solvent in addition to the fluorinated ether solvent E, but preferably the fluorinated ether solvent E is the only solvent. In this case, the solution or dispersion may consist of the components A, B, C, D and E, but may also contain additional non-solvent components in addition to the components A, B, C, and D. Here, the total amount of the components A, B, C and D is preferably 75% by mass or more, more preferably 80 or 85% by mass or more, such as 90% by mass or more or 95% by mass or more, relative to the total mass of all non-solvent components. The amount of the components A, B, C and D may also be 98% by mass or higher or 99% or higher, such as 100% by mass, relative to the total mass of all non-solvent components. Here, a non-solvent component is defined as a component that has a boiling point of 150°C or higher at 1 atm and is thus not removed during the solvent removal step.

The process may be conducted under normal air atmosphere, but is preferably conducted under inert gas (e.g. nitrogen or argon) conditions. Here, inert gas conditions denote that the oxygen content is 1% by mass or less, such as 0.1% by mass or less. Also, the atmosphere is preferably dry, denoting a relative humidity of 10% or less, preferably 1% or less, more preferably 0.1% or less.

### E Fluorinated Ether Solvent

The fluorinated ether solvent E is used to prepare a solution or dispersion for forming the CPE comprising the components A, B, C and D. Due to its chemical constitution, the fluorinated ether solvent E is capable of dissolving or dispersing the components without forming a passivation layer on the inorganic particles B having a garnet-like structure, and thus without impairing the ionic conductivity of these particles and the CPE as a whole. At the same time, the fluorinated ether solvent E has compatibility with the copolymer A and is capable of dissolving the copolymer A in substantial amounts, so that the formation of a CPE by a solvent-based process becomes possible, which is able to avoid an increase in resistance due to poor contact to the electrodes and/or the separator. For this reason, the solvent E is preferably free of carbonyl groups (C(=O)) and isocyanate groups (-NCO).

The fluorinated ether solvent E is preferably an a fluorinated dialkyl ether, wherein the alkyl groups each independently have 1 to 18, preferably 1 to 8 carbon atoms, more preferably 1 to 6 carbon atoms, wherein the alkyl groups may be straight, branched or cyclic alkyl groups, and wherein at least one, preferably two, three or more hydrogen atom(s) of the alkyl groups is replaced by a fluorine atom. Here, the alkyl groups may be further substituted with e.g. one or more hydroxyl groups, chlorine atoms or iodine atoms, but is preferably unsubstituted by such groups (i.e. the alkyl groups consist of carbon, fluorine and optionally hydrogen atoms). The alkyl groups may also be perfluorinated, but typically at least one hydrogen atoms remains at either of the alkyl groups.

In one embodiment, the fluorinated ether solvent E is selected from ether solvents represented by the following formula (I)

Formula (I): R₁-O-R₂

wherein R₁ and R₂ are each independently selected from fluoroalkyl groups of the general formula CₓH_{y}F_{z}, wherein x is independently 1 to 8, preferably 1 to 4, (y+z)=2x+1, y is independently an integer of 0 to 16, and z is independently an integer of 1 to 17. In one embodiment, z is preferably equal to or greater than x (i.e. the total number of fluorine atoms is at least as high as the total number of carbon atoms). An example of a solvent E is 1,1,2,2-Tetrafluoroethyl 2,2,3,3-Tetrafluoropropylether, which is commercially available from various suppliers.

The fluorinated ether solvent preferably has a boiling point (at 1 atm) of 150°C or less, more preferably 130°C or less, such as 120°C or less, 110°C or less or 100°C or less, in order to facilitate removal by heat and/or reduced pressure to form the solid CPE.

### BATTERY and DEVICE

The battery of the present invention is not particularly limited, as long as it a battery containing the CPE of the present invention. The invention is typically a battery relying on the transportation of lithium ions through the electrolyte, and is typically a lithium ion battery. This also includes batteries utilizing lithium in metallic form (i.e. in oxidation state 0) as electrode active material.

The device in which the battery is used is not particularly limited, and can be any electric or electronic device relying on secondary batteries as power source. Due to the increased ionic conductivity achieved by the present invention, the device is preferably a device requiring either a lightweight battery or a high electric current, and thus the device includes e.g. mobile phones, laptop computers, or battery electric or hybrid electric vehicles.

### EXAMPLES

The following examples are provided to illustrate the invention, but the present invention is not limited to the examples. The scope of the invention is defined in the appended claims.

### Examples 1 and 2 and Comparative Examples 1 and 2

An elastomer copolymer A made from vinylidene fluoride, tetrafluoroethylene and perfluoromethyl vinyl ether having a fluorine content of 64.5 mass%, a density of 1.80 g/cm³ according to ASTM D792, and a Mooney viscosity of 68 (100°C) respectively 44 (121°C) according to ASTM D1646, (Copolymer A) was pre-dried at 60°C under vacuum for 24 h prior to usage. Multi-fluorinated alkyl ether (1,1,2,2-tetrafluoroethyl 2,2,3,3-tetrafluoropropylether, Solvent E), Lithium bis(fluorosulfonyl)imide (a lithium salt C, LiFSI; Solvionic, Toulouse, France), 1-Butyl-1-methyl-pyrrolidinium bis(fluorosulfonyl)imide (Pyr14FSI, an ionic liquid D, Solvionic), and aluminium-doped LLZO(Li₇La₃Zr₂O₁₂) (lithium-containing solid electrolyte particles B having a garnet-type structure, Fraunhofer IKTS; Dresden, Germany) were used as obtained. All materials were stored under inert atmosphere inside a Glovebox prior to use.

A CPE was produced using the following procedure. Copolymer A, Lithium salt C and ionic liquid D were dissolved in 1,1,2,2-Tetrafluoroethyl-2,2,3,3-tetrafluoropropylether (mass ratio solvent/copolymer A = 10/1). At the same time LLZO was dispersed in a weight ratio of 1/10 in 1,1,2,2-tetrafluoroethyl 2,2,3,3-tetrafluoropropylether using a high energy input technique (homogenization). Both solutions are mixed according to the following weight ratio of the materials (Table 1). The CPE were casted on a polypropylene tray and the solvent was removed at room temperature and ambient pressure overnight. The resulting films were removed from the tray and prepared for the physicochemical and electrochemical characterization as described in the further sections.

**Table 1: Compositions for forming CPEs, all values in parts by mass**

| | Copolymer A | Lithium Salt C (LiFSI) | Ionic Liquid D (Pyr14FSI) | Solid Electrolyte Particles B |
|---|---|---|---|---|
| Comparative Example 1 | 40 | 30 | 30 | 0 |
| Comparative Example 2 | 40 | 20 | 40 | 0 |
| Example 1 | 40 | 30 | 30 | 20 |
| Example 2 | 40 | 30 | 30 | 30 |

### Thermal characterization

The thermal characterization of the samples was conducted on a Discovery DSC2500 (TA Instruments, New Castle, USA) and a Discovery TGA5500 (TA Instruments). In all cases 10 mg of the electrolyte material was investigated in Aluminium pans (in case of DSC the pans were hermetically closed with Aluminium lids). To ensure an inert atmosphere nitrogen gas was purged through the chambers of the instruments. Sample preparation of the DSC measurements was conducted in inert atmosphere, the TGA sample is unavoidably exposed to ambient air during the taring and preparation of the sample, but was otherwise also kept under Ar atmosphere. The DSC measurements were conducted with a heat-cool-heat cycle, between -40 °C and 200 °C and a temperature gradient of 10K/min. The first heating was used to erase the thermal history of the sample. In addition, a second measurement was conducted between -100 °C and 0 °C using a heating rate of 20 K/min to determine the glass transition temperature of the polymeric part of the CPE. TGA measurements were conducted in a temperature range of 35 °C - 600 °C with a heating ramp of 20 K/min.

### Scanning Electron Microscopy

The microstructure of the CPE membranes was investigated by means of SEM using an EVO10-SEM (Carl-Zeiss Microscopy GmbH, Oberkochen, Germany) equipped with a tungsten electron source a secondary-electron detector, a backscattering electron detector and energy-dispersive- X-ray-detector (Oxford Instruments plc, Abingdon, UK). All measurements were conducted in high vacuum. The sample preparation was performed by sputtering a thin layer of Gold on the membranes in an Ar-Plasma.

### Ionic Conductivity Measurements

The determination of the ionic conductivity of the samples was performed using three-electrode cells (Swagelock, Solon, USA) tempered by climate chambers (Binder GmbH, Tuttlingen, Germany) using stainless steel blocking electrodes. All cells were kept at 40 °C prior to the beginning of the measurements for at least 24h. Upon changing the measurement temperature the three-electrode-cells were kept in the respective temperature chamber for at least 12 h for each temperature. To determine the ionic conductivity of the CPE membranes Electrochemical Impedance Spectroscopy (EIS) was conducted using a VMP3 potentiostat (BioLogic, Seyssinet-Pariset, France) adjusting the sinusoidal voltage amplitude to 10mV within a frequency range of 500 kHz - 100 mHz.

### Physicochemical Characterization

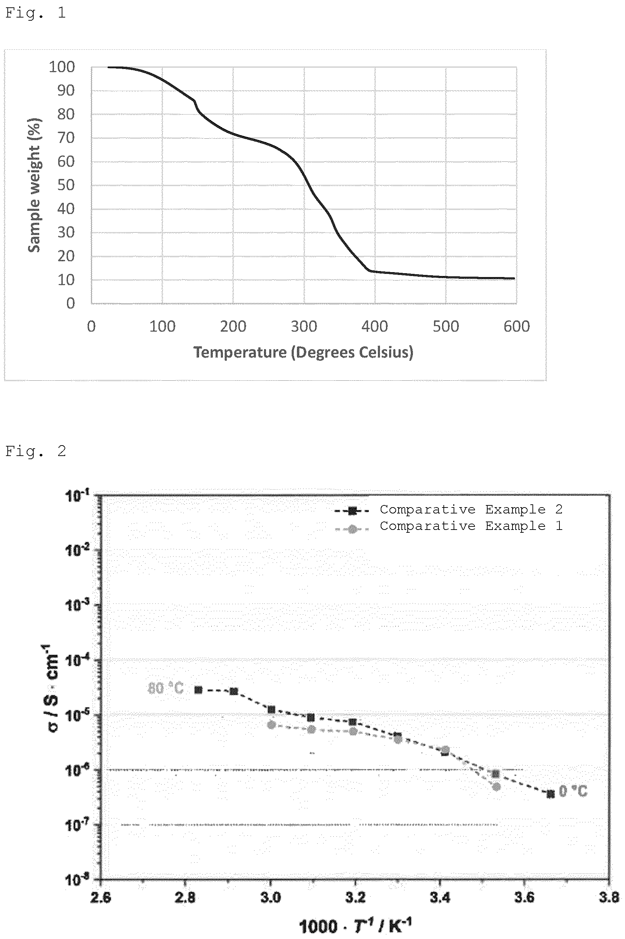

For the physicochemical investigation of the samples DSC and TGA measurements were performed within a temperature range of -100 °C to 200 °C and 25 °C to 600 °C respectively. The results of the TGA measurement for Example 1 are depicted in Figure 1.

The TGA curve in Figure 1 gives insight into different effects that are observable over the treated temperature range. Firstly, we observe a decrease of the sample mass after 100 °C up to 150 °C, which is very likely due to the uptake of water from the atmosphere during the sample preparation. This strongly indicates that processing of the CPE should be performed inside inert-gas or at least dry-room atmosphere as much as possible. It is very unlikely that an actual decomposition if the CPE is observed in this T-range, because in the DSC measurements, which are discussed in the following paragraph, no effects are observable in the same temperature range. The actual decomposition of the material is observed between 300 °C and 450 °C and reveals the superior thermal stability compared to conventional electrolyte systems based on organic carbonates. DSC measurements were also conducted (not shown). The results support the superior thermal stability and allow further deductions on the physicochemical properties of the CPE. In the cooling- and heating cycle between 200 °C and -40 °C, no phase transitions within the CPE material was observed. This suggests that the CPE does neither exhibits a reactivity between the individual components in this temperature range and also no other phase transitions from the plasticized polymeric matrix, or the LLZO particle surface is observable, which means that the CPE matrix may be of amorphous polymeric chains respectively pure LLZO particles. This shows how the CPE preparation method aids the compatibility between all individual components. In a second DSC measurement (on the same sample, also not shown) the glass transition temperature Tg was determined. A value of -32 °C was found, meaning that theoretically the CPE will maintain the ability to conduct Li-ions through the polymeric part of the membrane even at temperatures below 0 °C.

In summary, it has been shown that the materials are compatible towards each other and the resulting CPE (in particular if processed in inert or at least dry atmosphere) exhibits superior thermal stability compared to conventional liquid electrolytes. The polymeric matrix consists only of amorphous polymeric parts, which is beneficial for the ionic conductivity of the matrix. As the disclosed manufacturing route for the CPE enables direct coating of the CPE onto electrodes (separately before of after cell assembly), ionic conductivity benefits are rated more important than mechanical stability of free-standing layers. At last, a glass transition temperature below -20 °C will allow a sufficient ion transport even at lower temperatures.

### Electrochemical Characterization

It was determined that the polymeric matrix of Comparative Examples 1 and 2, including the Copolymer A, the lithium salt C and the ionic liquid D, but not the solid electrolyte particles B, is able to contribute to the ionic conductivity of the CPE and does not only function as a pure binder matrix for the particles B. The results of the ionic conductivity measurements of these benchmark formulations are depicted in Figure 2.

The polymeric matrix of Comparative Examples 1 and 2 show the ability to function as ion conductive electrolyte material within a reasonable temperature range. Ionic conductivities between 10⁻⁵ S/cm to 10⁻⁴ S/cm can be reached in a temperature range from 40 - 80 °C. Also, no significant dependence of the ionic conductivity of the polymer electrolyte membranes on the variation of salt and ionic liquid content between 20 wt%- 30 wt% and 30-40 wt%, respectively, is observed.

As discussed above, a considerable improvement of the ionic conductivity within the CPE is necessary to increase the performance of the CPE. This increase in conductivity is obtained by the addition of Li-ion conducting ceramic nanoparticles with a garnet type crystal structure, i.e. the particles B. In addition to the expected increase of the conductivity, the particles B also grant an increase in the Li transference number of the CPE materials. This is related to the fact that the particles B only offers conductive pathways for Li ions through its crystal structure and therefore enhances the movement of these ions compared to the larger ions which are part of the ionic liquid used for the polymeric matrix. This effect is more pronounced for CPEs with a relatively high LLZO content, which is why in one embodiment of the present invention the content of the particles B is from 20 wt% to 30 wt%. Depending on the desired mechanical properties and surface roughness of the CPE, this amount can be further adjusted according to the planned application of the CPE. In principle, the best intrusion of the electrolyte into a porous electrode is usually achieved with smaller LLZO contents. Hence, it may be necessary to find a suitable balance needs to be established between increase of ionic conductivity, increase in transference number and processability of the CPE.

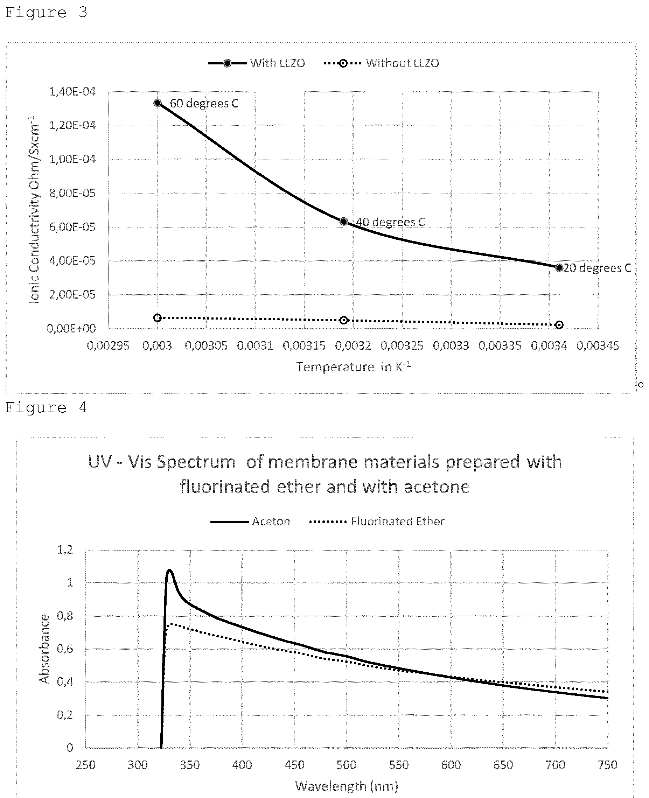

To determine the improvement of the ionic conductivity by addition of the LLZO particles we manufactured electrode cells of Example 1 and determined the ionic conductivities with impedance spectroscopy using the identical conditions as previously performed for the polymeric membranes. The ionic conductivity values of the cell employing the CPE material of Example 1 are presented in Figure 3 with the temperature dependent ionic conductivity of the pure polymeric matrix for comparison.

The ionic conductivity values in Figure 3 clearly show the potential of the LLZO addition and consequential formation of a CPE. As observable for the first three electrode cell (black squares) the ionic conductivity can be increased around one order of magnitude. With a conductivity of approximately 0.1 mS/cm, a sufficient value for successful implementation in realistic solid-state Lithium ion batteries is reached upon addition of LLZO.

### Solvent Effect

In the method of the present invention, a fluorinated ether solvent E is used. This is because other solvents are often unable to dissolve the fluorinated copolymer A and/or lead to a passivation effect on the LLZO, forming a passivating layer that can impair ionic conductivity.

In order to show the effect of the solvent on the passivation step, identical compositions comprising the compounds A, B, C and D (LLZO) were prepared using either a fluorinated ether solvent (1,1,2,2-Tetrafluoroethyl 2,2,3,3-Tetrafluoropropylether) or acetone. After preparing a slurry of the material in of the solvent, the material obtained using acetone had a yellow colour, while the material prepared using a fluorinated ether was white . This difference in colour was also confirmed by UV Vis spectroscopy (shown in Figure 4), showing for the material prepared with acetone an increased absorbance around 330 nm that is believed to be caused by a surface passivation layer formed on the LLZO particles.

## Claims

1. A solid composite polymer electrolyte (CPE) for a lithium ion secondary battery comprising
A a fluorine-containing copolymer;
B lithium-containing solid electrolyte particles having a garnet-type structure;
C a lithium salt; and
D an ionic liquid.

2. The solid composite polymer electrolyte according to claim 1, wherein the fluorinated copolymer is a fluorine-containing elastomer.

3. The solid composite polymer electrolyte according to any one of claims 1 to 2 wherein the fluorinated copolymer comprises recurring units derived from vinylidene fluoride and at least one selected from the group consisting of perfluoro (alkyl vinyl ether)s, perfluoro (alkoxy vinyl ether)s, tetrafluoroethylene, hexafluoropropylene, trifluoroethylene, chlorotrifluoroethylene, monofluoroethylene, 2,3,3,3-tetrafluoropropylene, and 1,3,3,3-tetrafluoropropylene.

4. The solid composite polymer electrolyte according to any one of claims 1 to 3 wherein the fluorinated copolymer comprises recurring units derived from at least one selected from a perfluoro (alkyl vinyl ether) or perfluoro (alkoxy vinyl ether).

5. The solid composite polymer electrolyte according to any one of claims 1 to 4, wherein the fluorinated copolymer and/or the CPE has a glass transition temperature of 0°C or lower, preferably -10 °C or lower, more preferable -15 °C or lower, most preferably -20°C or lower.

6. The solid composite polymer electrolyte according to any one of claims 1 to 5, wherein the fluorinated copolymer comprises recurring units derived from a perfluoro (alkyl vinyl ether) and/or perfluoro (alkoxy vinyl ether) in an amount of 10 to 60 mol%, relative to all recurring units of the fluorine-containing copolymer, and/or wherein preferably the copolymer comprises recurring units from a) tetrafluoroethylene and/or hexafluoropropylene and/or b) vinylidene fluoride.

7. The solid composite polymer electrolyte according to any one of claims 1 to 6, wherein the fluorine containing copolymer is a copolymer consisting of repeating units derived from
d. at least one selected from a perfluoro (alkyl vinyl ether) and a perfluoro (alkoxy vinyl ether) in an amount of 10 to 60 mol%, relative to all repeating units of the copolymer;
e. vinylidene fluoride in an amount of 40 to 90 mol%, relative to all repeating units of the copolymer; and
f. optionally, tetrafluoroethylene and/or hexafluoropropylene, preferably tetrafluoroethylene, in an amount of 1 to 30 mol%, relative to all repeating units of the copolymer.

8. The solid composite polymer electrolyte according to any one of claims 1 to 7, wherein the fluorine containing copolymer has a solubility in 1,1,2,2-Tetrafluoroethyl 2,2,3,3-Tetrafluoropropylether of 1% by mass or more, preferably 5% by mass or more, at 20°C.

9. The solid composite polymer electrolyte according to any one of claims 1 to 9, wherein the solid electrolyte particles having a garnet-type structure are selected from Li3, Li5, Li6 and Li7 types, which is preferably selected from Li5 and Li7 types, and is more preferably Li₇La₃Zr₂O₁₂ (LLZO).

10. The solid composite polymer electrolyte according to any one of claims 1 to 9, wherein the components A to D are comprised in the following amounts in mass%, relative to the total mass of the solid composite polymer electrolyte:
A fluorine-containing copolymer: 20 to 70 mass%
B solid electrolyte particles having a garnet-type structure: 10 to 50 mass%
C a lithium salt: 10 to 50 mass%
D ionic liquid:10 to 50 mass%.

11. The solid composite polymer electrolyte according to any one of claims 1 to 11, which has a lithium ion conductivity of 10⁻⁶ S cm⁻¹ or higher at 60°C; and/or wherein the solid electrolyte particles having a garnet structure are free from a passivation layer.

12. The solid composite polymer electrolyte according to any one of claims 1 to 11, further comprising a fluorinated ether solvent E.

13. A method for producing a solid composite polymer electrolyte as defined in any of the preceding claims, the method comprising preparing a mixed solution or dispersion comprising
A a fluorine-containing copolymer;
B lithium-containing solid electrolyte particles having a garnet-type structure;
C a lithium salt;
D an ionic liquid; and
E a fluorinated ether solvent.
wherein preferably the fluorinated ether solvent E is selected from ether solvents represented by the following formula (I)
Formula (I): R₁-O-R₂
wherein R₁ and R₂ are each independently selected from fluoroalkyl groups of the general formula CₓH_{y}F_{z}, wherein x is independently 1 to 8, (y+z)=2x+1, y is independently an integer of 0 to 16, and z is independently an integer of 1 to 17.

14. The method for producing a solid composite polymer electrolyte according to claim 13, wherein the preparation of the mixed solution or dispersion comprises
preparing a first solution or dispersion comprising a fluorine-containing copolymer; a lithium salt; and an ionic liquid in a fluorinated ether solvent; and
preparing a second solution or dispersion comprising lithium-containing solid electrolyte particles in a fluorinated ether solvent, and
combining the first and the second solution or dispersion to form the mixed solution or dispersion.

15. A lithium ion secondary battery comprising the solid composite polymer electrolyte according to any one of claims 1 to 12.
